(19) **Europäisches Patentamt / European Patent Office / Office européen des brevets**

(11) **EP 3 839 814 B1**

(12) **FASCICULE DE BREVET EUROPEEN**

(45) Date de publication et mention de la délivrance du brevet:
**19.07.2023 Bulletin 2023/29**

(21) Numéro de dépôt: **20214018.2**

(22) Date de dépôt: **15.12.2020**

(51) Classification Internationale des Brevets (IPC):
*G01J 3/02* (2006.01)   *G01J 3/26* (2006.01)
*G06V 20/13* (2022.01)   *H04N 25/40* (2023.01)
*H04N 25/42* (2023.01)   *H04N 25/46* (2023.01)
*G02B 26/10* (2006.01)   *G01J 3/28* (2006.01)
*H04N 25/13* (2023.01)

(52) Classification Coopérative des Brevets (CPC):
**G02B 26/10; G01J 3/027; G01J 3/26; G01J 3/28;
G01J 3/2803; G01J 3/2823; G06V 20/13;
H04N 25/135; H04N 25/41; H04N 25/42;
H04N 25/46;** G01J 2003/2806; G06V 20/194

(54) **INSTRUMENT D'OBSERVATION OPTIQUE EMBARQUE A RESOLUTION SPATIALE ET SPECTRALE VARIABLES**

BORDSEITIGES OPTISCHES BEOBACHTUNGSINSTRUMENT MIT VARIABLER RÄUMLICHER UND SPEKTRALER AUFLÖSUNG

ON-BOARD OPTICAL OBSERVATION INSTRUMENT WITH VARIABLE SPATIAL AND SPECTRAL RESOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914567**

(43) Date de publication de la demande:
**23.06.2021 Bulletin 2021/25**

(73) Titulaire: **THALES**
**92400 Courbevoie (FR)**

(72) Inventeurs:
• **MARCON, Benoit**
**06156 Cannes (FR)**
• **MATHIEU, Sandrine**
**06156 Cannes (FR)**
• **BUTEL, Guillaume**
**06156 Cannes (FR)**
• **SIMEONI, Denis**
**06156 Cannes (FR)**
• **CLEMENT, David**
**06156 Cannes (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2009 016 632     US-A1- 2018 067 017**

• **ABDO MOHAMMAD ET AL: "Dual-mode pushbroom hyperspectral imaging using active system components and feed-forward compensation", REVIEW OF SCIENTIFIC INSTRUMENTS, AIP, MELVILLE, NY, US, vol. 89, no. 8, 23 août 2018 (2018-08-23), XP012231048, ISSN: 0034-6748, DOI: 10.1063/1.5025896 [extrait le 2018-08-23]**

**Description**

Le domaine technique de l'invention est celui des systèmes optiques d'observation multispectraux embarqués sur satellite ou sur aéronef. Ces systèmes défilent au-dessus du terrain à observer et enregistrent des images du terrain pendant la durée du défilement. Généralement, ces systèmes permettent de faire une image du terrain survolé mais également d'en faire une analyse spectrale. Le volume, le poids et les capacités d'enregistrement de ces systèmes optiques sont nécessairement limités.

Une des performances principales d'un tel système d'observation optique est le niveau de signal capté dans chaque échantillon d'image. Dans le cas d'un système d'observation orbital ou aéroporté, deux caractéristiques majeures du système optique influent sur le niveau de signal reçu.

La première caractéristique est l'étendue géométrique qui correspond à l'étendue spatiale d'un échantillon de signal acquis. La seconde caractéristique est la bande spectrale, qui correspond à l'étendue spectrale dudit échantillon d'image.

Généralement, le domaine d'observation spectrale terrestre est compris entre 250 nanomètres et 1500 nanomètres.

L'étendue géométrique d'un système spatial ou aéroporté d'observation de la terre est proportionnelle à la surface de collection de l'optique, proportionnelle au pas d'échantillonnage de la scène observée et inversement proportionnelle au carré de la distance entre le système optique et la scène observée.

La surface de collection correspond à la surface de la pupille du système optique. Le pas d'échantillonnage correspond à la projection du pixel du détecteur sur la surface observée. La distance entre le système optique et la scène observée correspond à l'altitude du satellite ou du système aéroporté.

Par ailleurs, le temps d'acquisition d'une image ou d'une portion d'image est nécessairement limité par la vitesse de défilement de l'image sur le détecteur. En effet, l'acquisition des données doit être terminée lorsque l'image du terrain se déplace d'une ligne à la ligne suivante. Ce temps d'acquisition est, par exemple, de l'ordre de cent microsecondes ou de quelques centaines de microsecondes pour un satellite évoluant en orbite basse.

Pour atteindre un objectif de niveau de signal, il est donc nécessaire, au moment de la conception du système optique, de moduler le niveau relatif de l'étendue géométrique et de la bande spectrale.

A titre de premier exemple, dans le cas d'une mission dite « haute résolution », l'objectif principal est de réduire le pas d'échantillonnage spatial de la scène. On choisit alors des pupilles de grandes dimensions et des bandes spectrales larges afin de compenser la perte de signal liée à la réduction du pas d'échantillonnage.

A l'inverse, dans le cas d'une mission dite « hyperspectrale », l'objectif principal est de réduire le pas d'échantillonnage spectral ainsi que la largeur des bandes spectrales acquises sur chaque échantillon. On augmente alors le pas d'échantillonnage spatial pour compenser la perte de signal.

Comme on le voit, ces deux types de mission « haute résolution » ou « hyperspectrale » conduisent à des systèmes optiques différents.

Pour remplir les deux types de mission, le système optique pourrait comporter une tête optique unique et un séparateur optique permettant d'envoyer le flux lumineux sur deux plans focaux différents, le premier étant dédié à la haute résolution spatiale et le second à la haute résolution spectrale.

Les inconvénients de cette solution sont que le système optique est plus complexe à réaliser et à régler et que les photodétecteurs ainsi que leurs électroniques d'alimentation et de traitement sont nécessairement doublés.

En pratique, on préfère réaliser un instrument dédié à un type d'application, ce qui n'est pas totalement satisfaisant.

ABDO MOHAMMAD ET AL: "Dual-mode pushbroom hyperspectral imaging using active system components and feed-forward compensation", REVIEW OF SCIENTIFIC INSTRUMENTS, AIP, MELVILLE, NY, US, vol. 89, no. 8, 23 août 2018 (2018-08-23), ISSN: 0034-6748, DOI: 10.1063/1.5025896 divulgue un système qui permet de changer entre un mode d'acquisition d'image 2D et un mode d'acquisition d'image hyperspectrale.

US2018067017A1 divulgue un système de l'acquisition d'images par balayage de fauchée qui permet la compensation des aberrations optiques.

Un objet de l'invention est de réaliser ces deux missions dans un instrument unique sans compliquer la tête optique en utilisant une matrice de détection bidimensionnelle dans laquelle, en exploitant le défilement de l'instrument par rapport au sol, une des dimensions est dédiée à l'étendue spatiale et la seconde dimension à l'étendue spectrale. Le passage de la haute résolution spatiale à la haute résolution spectrale est fait en regroupant les signaux issus des pixels de la matrice de façon différente, soit en ligne, soit en colonne.

Plus précisément, l'invention concerne un instrument d'observation optique destiné à être embarqué sur un satellite ou un aéronef selon la revendication 1.

Avantageusement, la durée de la période d'échantillonnage correspond au changement d'une ligne de l'image du terrain survolé.

Avantageusement, la durée de la période d'échantillonnage correspond au changement de plusieurs lignes de l'image du terrain survolé.

Avantageusement, dans un mode particulier d'acquisition, chaque bloc comporte une et une seule ligne de pixels.

Avantageusement, la sommation des charges des pixels appartenant à un bloc se fait en mode dit « décalage temporel et intégration » ou « TDI », c'est-à-dire que les transferts des charges entre deux lignes adjacentes se font à la vitesse de déplacement de l'image sur les lignes de pixels.

Avantageusement, la sommation des charges des pixels appartenant à un bloc se fait en sommation simple dit «binning», c'est-à-dire que les transferts des charges entre deux lignes ou deux colonnes adjacentes se font par simple accumulation. Avantageusement, le système optique comporte un dispositif de dispersion spectrale agencé de façon que deux lignes successives représentent la même ligne d'image dans deux bandes spectrales différentes et adjacentes.

Avantageusement, le système optique comporte des filtres spectraux disposés sur la matrice de photodétection, la longueur d'un filtre étant égale à la longueur d'une ligne de pixels.

Avantageusement, les filtres spectraux sont des cavités Fabry-Perot dont la largeur spectrale est d'environ 10 nanomètres.

Avantageusement, la matrice de photodétection bidimensionnelle fonctionne soit en mode d'acquisition simultanée ou « global shutter », soit en mode d'acquisition séquentielle ou « rolling shutter ».

Avantageusement, le système optique comporte des moyens optiques d'orientation du champ agencé de façon à balayer successivement deux fois la même portion de terrain, le premier balayage étant réalisé selon un premier mode d'acquisition, le second balayage étant réalisé selon un second mode d'acquisition différent du premier mode d'acquisition.

L'invention concerne également un satellite selon la revendication 12.

D'autres caractéristiques, détails et avantages de l'invention ressortiront à la lecture de la description faite en référence aux dessins annexés donnés à titre d'exemple et qui représentent, respectivement :

La figure 1 une illustration d'une vue de dessus d'un fragment de matrice de photodétection selon l'invention ;

La figure 2 une représentation d'une image dans le cas où le système optique comporte un dispositif de dispersion spectrale ;

La figure 3 une représentation d'une image dans le cas où le système optique comporte des filtres spectraux disposés sur la matrice de photodétection ;

La figure 4 une représentation de l'acquisition d'une image pendant une période d'acquisition donnée ;

La figure 5 une représentation de l'acquisition de l'image précédente pendant la période d'acquisition suivante ;

La figure 6 une représentation d'un premier mode d'acquisition selon l'invention ;

La figure 7 une représentation d'un second mode d'acquisition selon l'invention ;

La figure 8 représente une vue de dessus d'une matrice de détection selon l'invention ;

La figure 9 représente une vue de dessus partielle agrandie de la matrice de détection précédente.

L'instrument d'observation selon l'invention comporte au moins un système optique, une matrice de photodétection associée, des moyens de dispersion spectrale et une unité électronique de commande, d'alimentation, d'acquisition et de traitement des données recueillies par la matrice de photodétection.

L'instrument est monté à bord d'un satellite d'observation ou d'un aéronef. Il est destiné à de l'observation terrestre à haute altitude ou en orbite basse.

Le système optique forme une image du terrain survolé dans le plan de la matrice de photodétection. Le système optique peut être dioptrique ou catadioptrique. L'ouverture, la focale et le champ angulaire du système optique sont déterminés en fonction des dimensions du terrain à analyser, de l'altitude et de la vitesse du porteur, de la bande spectrale à analyser, des caractéristiques géométriques et de la sensibilité de la matrice de photodétection de façon à obtenir les résolutions spatiale et spectrale et le rapport signal sur bruit souhaités. L'utilisation d'une matrice de photodétection et non pas d'une simple barrette monodimensionnelle a un impact sur l'architecture optique dans la mesure où le champ couvert est nécessairement bidirectionnel.

Généralement, le système optique est dimensionné de façon que sa résolution soit de dimensions voisines de celles des pixels de la matrice. Ces différents paramètres étant choisis, la détermination de la combinaison optique du système optique fait partie des connaissances générales de l'homme du métier.

La matrice de photodétection est caractérisée par sa technologie, sa sensibilité spectrale, son nombre de lignes et de colonnes de pixels photosensibles et ses dimensions. Généralement, la matrice est du type « CCD », acronyme de « Charge Couple Device » ou « CMOS », acronyme de « Complementary Metal-Oxide-Semiconductor » selon le mode de transduction en charges électriques des photons reçus. Il est à noter que le plan image peut comporter plusieurs matrices de photodétection.

A titre d'exemple, la matrice comporte plusieurs milliers de lignes et de colonnes, soit plusieurs millions de pixels. Le pas d'un pixel est de quelques microns et ses dimensions de l'ordre de quelques centimètres. Là encore, ce sont des composants optoélectroniques connus de l'homme du métier.

La matrice de photodétection bidimensionnelle peut fonctionner soit en mode d'acquisition simultanée ou « global shutter », soit en mode d'acquisition séquentielle ou « rolling shutter ».

Les moyens de dispersion spectrale sont agencés de façon qu'au niveau de la matrice de photodétection dans le plan focal du système optique, on obtienne dans une dimension l'information spatiale et dans la dimension perpendiculaire l'information spectrale. Par convention, dans ce qui suit, l'information spatiale est selon les lignes de la matrice et l'information spectrale selon les colonnes de la matrice.

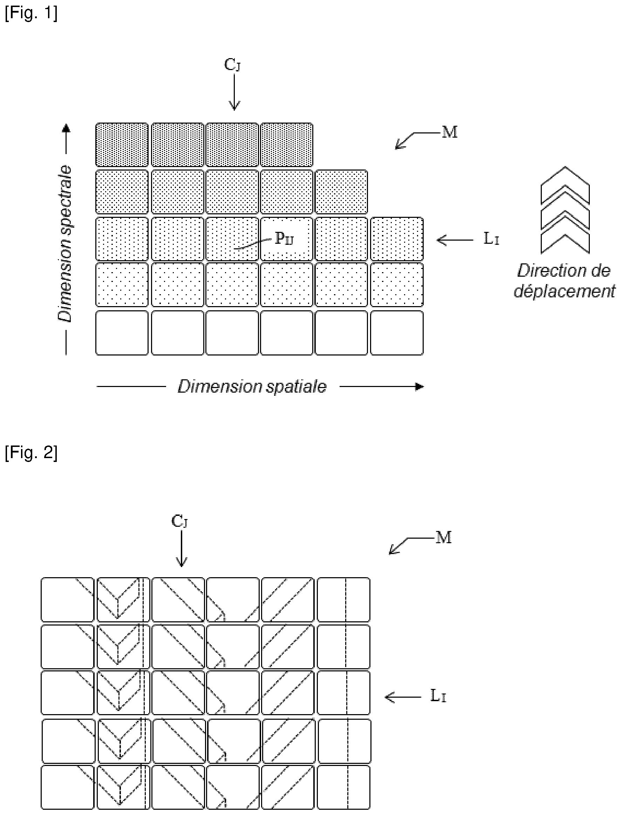

A titre d'exemple, la figure 1 représente de façon simplifiée une fraction de matrice M selon l'invention. Elle comporte des lignes $L_I$ de colonne $C_J$ de pixels $P_{IJ}$. Sur cette figure 1 et les suivantes, les pixels sont représentés par des rectangles à coins arrondis. Les lignes de pixels représentent des lignes d'image. Les colonnes de pixels représentent des points de l'image dans des bandes spectrales différentes. Sur la figure 1, les bandes spectrales sont représentées par des pointillés dont la densité dépend de la bande spectrale. Généralement, la largeur d'une bande spectrale est comprise entre quelques nanomètres et dix nanomètres. Sur cette figure, on a représenté par des chevrons la direction de déplacement de l'image du terrain sur la matrice.

Il existe au moins deux méthodes permettant d'assurer la dispersion spectrale sur la matrice. Dans un premier mode de réalisation, on introduit un élément dispersif tel qu'un prisme ou un réseau de dispersion en amont de la matrice. Dans ce cas, comme on le voit sur la figure 2, toutes les lignes $L_I$ représentent une même ligne d'image mais dans des bandes spectrales différentes. Chaque colonne $C_J$ représente la dispersion spectrale d'un point de l'image sur un spectre donné. L'élément dispersif est adapté à la plage de longueurs d'onde que l'on souhaite analyser et à la résolution de la matrice de photodétecteurs.

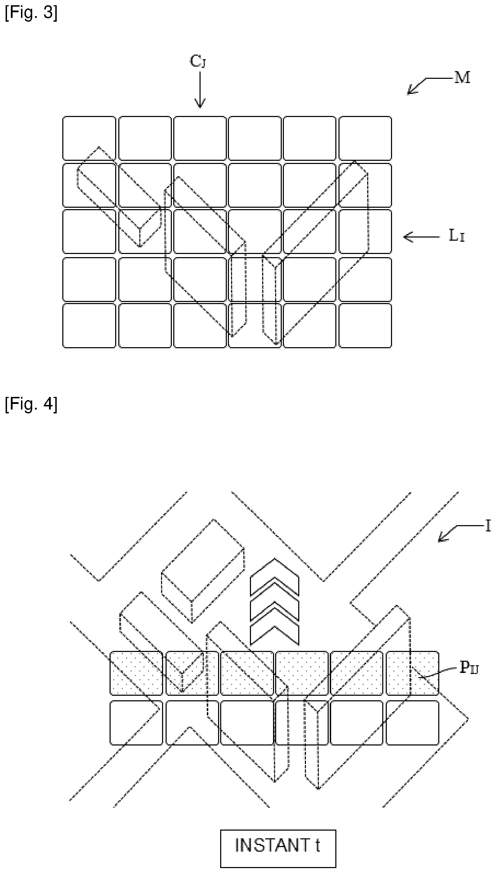

Dans un second mode de réalisation, des filtres spectraux sont disposés sur les pixels de la matrice de photodétection, la longueur d'un filtre étant égale à la longueur d'une ligne de pixels. Dans ce cas, comme on le voit sur la figure 3, la matrice reçoit une image bidimensionnelle sur la totalité de sa surface mais chaque ligne de cette image est dans une bande spectrale différente de celle des autres lignes.

Dans cette configuration, les lignes peuvent être rassemblées en groupe de plusieurs lignes comportant le même filtrage spectral. A titre d'exemple, les filtres spectraux sont des cavités Fabry-Perot dont la largeur spectrale est d'environ 10 nanomètres.

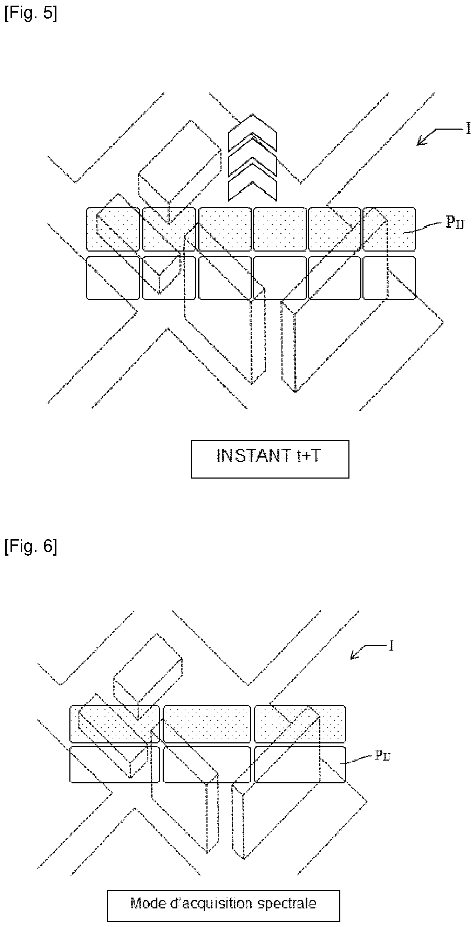

Le mode de fonctionnement général de l'instrument d'observation est représenté sur les figures 4 et 5. La figure 4 représente la position d'une image I sur un groupe de pixels à un instant t. Sur cette figure et la suivante, seules deux lignes de six pixels $P_{IJ}$ sont représentées. Les chevrons symbolisent la direction de déplacement de l'image.

Si on note T la période d'échantillonnage, à l'instant t+T, l'image s'est déplacée de la valeur d'une ligne comme on le voit sur la figure 5. Cette période dépend de la vitesse V de défilement du terrain sous le porteur et de la résolution spatiale attendue $R_S$. on a la relation simple :

$$T = \frac{R_S}{V}.$$

A titre d'exemple, dans le cas d'un instrument embarqué sur satellite, si la vitesse de défilement est de 5000 ms$^{-1}$ et la résolution attendue au sol, connue sous l'appellation « GSD » signifiant « Ground Sample Distance » est d'un mètre, la durée d'acquisition est donc de 200 microsecondes.

Avec les technologies actuelles, il est impossible de lire la totalité d'une matrice de photodétection à haute résolution pendant une durée aussi courte.

L'objet de l'invention est d'optimiser cette lecture selon que l'on cherche à privilégier la résolution spatiale ou la résolution spectrale. Dans le premier cas, on parle d'imagerie multispectrale ou panchromatique à faible GSD. Dans le second cas, on parle d'imagerie hyperspectrale à moyenne GSD.

Ainsi, l'instrument d'observation optique selon l'invention comporte plusieurs modes d'acquisition, typiquement au moins deux modes, chaque mode étant adapté à un type de résolution souhaitée.

La commutation d'un mode à l'autre peut se faire par télécommande à distance, en vol pour un satellite par exemple et la conception du système optique d'entrée peut être spécifiquement optimisé pour un mode d'acquisition ou différents modes d'acquisition.

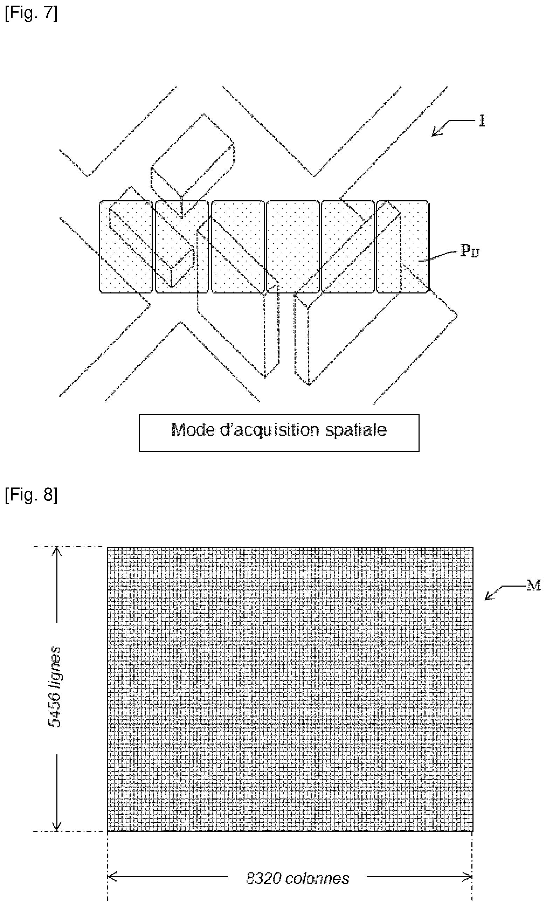

Les figures 6 et 7 illustrent, à titre d'exemple et de façon très simplifiée, deux modes d'acquisition. Il peut, bien entendu, exister une pluralité de modes d'acquisition. Ces figures correspondent à la lecture des pixels des figures 4 et 5. Dans le premier mode d'acquisition de la figure 6, la lecture des lignes de pixels est effectuée par blocs de pixels, trois pixels selon l'exemple. La lecture se fait ligne par ligne. La résolution spatiale est dégradée d'un facteur 3 et la résolution spectrale est conservée. Ce mode permet de lire trois fois plus de lignes.

Dans le second mode d'acquisition de la figure 7, la lecture des colonnes de pixels est effectuée par blocs de pixels, deux pixels dans l'exemple. La résolution spatiale est conservée et la résolution spectrale est dégradée d'un facteur 2. Ce mode d'acquisition permet de lire deux fois plus de lignes.

Comme on le verra dans la suite de la description, la forme des blocs matriciels de pixels de lecture peut contenir de grandes quantités de pixels permettant de mettre en oeuvre une pluralité de modes d'acquisition. Il existe deux grands modes de lecture des blocs de pixels.

Le premier mode est dit « TDI », signifiant « Time-Directed intégration » ou « Décalage Temporel et Intégration ». Les transferts des charges entre deux lignes adjacentes se font à la vitesse de déplacement de l'image sur les lignes de pixels. Ainsi, on peut accumuler sur un même pixel les charges issues de plusieurs pixels correspondant à un même point image. On démontre facilement que le gain en rapport signal sur bruit est égal à $\sqrt{N}$ , N correspondant au nombre d'étages de pixels dont les charges sont accumulées.

Les N étages TDI peuvent être issus de bandes spectrales différentes, ce qui revient à sommer, pour un même point d'image, des bandes spectrales différentes et donc à élargir la bande spectrale équivalente du signal ainsi généré sur ce point d'image. Les bandes spectrales peuvent également être juxtaposées ou discontinues. On parle alors de « TDI spectral ». Ce mode TDI est particulièrement bien adapté lorsque le système optique comporte des filtres spectraux disposés sur la matrice de photodétection dans la mesure où, comme on l'a vu précédemment, la matrice reçoit une image bidimensionnelle sur la totalité de sa surface, chaque ligne de cette image étant dans une bande spectrale différente de celle des autres lignes.

Le second mode est connu sous le terme anglo-saxon de «binning». Il signifie que la sommation des charges des pixels se fait en sommation simple, c'est-à-dire que les transferts des charges entre deux colonnes adjacentes ou deux lignes adjacentes se font par simple accumulation de charges.

Ce mode « binning » est particulièrement bien adapté lorsque le système optique comporte un réseau de dispersion spectrale dans la mesure où, comme on l'a vu précédemment, toutes les lignes de la matrice représentent une même ligne d'image mais dans des bandes spectrales différentes. Chaque colonne C de la matrice représente alors la dispersion spectrale d'un point de l'image sur un spectre donné. Comme dans le cas du TDI, le gain en rapport signal sur bruit est égal à $\sqrt{N}$ , N correspondant au nombre d'étages de pixels dont les charges sont accumulées. Il est également bien adapté lorsque les charges sont accumulées sur une même ligne.

Ainsi, diverses combinaisons de modes de lecture en binning et/ou en mode TDI permettent ainsi d'adresser différents niveau de résolutions spatiale et spectrale. Les opérations de binning et/ou de TDI peuvent se faire dans le détecteur. Par exemple, certaines puces matricielles CMOS ont la capacité de faire du traitement TDI ou du binning. Ces opérations peuvent être également effectuées en dehors de la matrice de détection, dans une électronique de proximité. Il n'est pas nécessaire que les opérations se fassent en temps réel ; il est également possible de stocker les données pour une utilisation ultérieure.

Pour garantir un débit le plus fixe possible en sortie de l'instrument, pour s'adapter aux capacités maximum de lecture des détecteurs ou du traitement des données, tout en atteignant le niveau de rapport signal sur bruit adéquat en fonction de chaque type de mission, il est avantageux de sélectionner un nombre limité de bandes spectrales, même dans le cas d'une mission hyperspectrale.

A titre d'exemple non limitatif, l'instrument d'observation optique selon l'invention peut avoir les caractéristiques définies ci-dessous à partir de laquelle il est possible de définir simplement des variantes en changeant les paramètres de l'instrument ou de son porteur.

Le système optique est un télescope. Sa pupille a un diamètre de 450 millimètres et sa focale vaut 2.73 mètres. Son ouverture numérique est donc de 6.1.

La matrice de photodétection utilisée pour échantillonner l'image de la scène projetée par le système optique est une matrice de type CMOS numérique. Elle comporte 5456 lignes. Chaque ligne comporte 8320 pixels. Les pixels sont carrés. Leur côté vaut 4.4 microns. Plusieurs détecteurs peuvent être utilisés pour agrandir le champ perpendiculairement à la vitesse de défilement. Cette matrice M est représentée en figure 8.

La fréquence maximum d'utilisation du détecteur est limitée par le temps de lecture de toutes les lignes, qui est, dans le cas présent, de 6.5 ms pour convertir l'intégralité des lignes avec une résolution de 12 bits par pixel.

Le temps de lecture de la matrice est proportionnel au nombre de lignes lues avec une durée élémentaire de lecture qui est donc égale à $4,77\mu$s pour chaque paquet consécutif de quatre lignes.

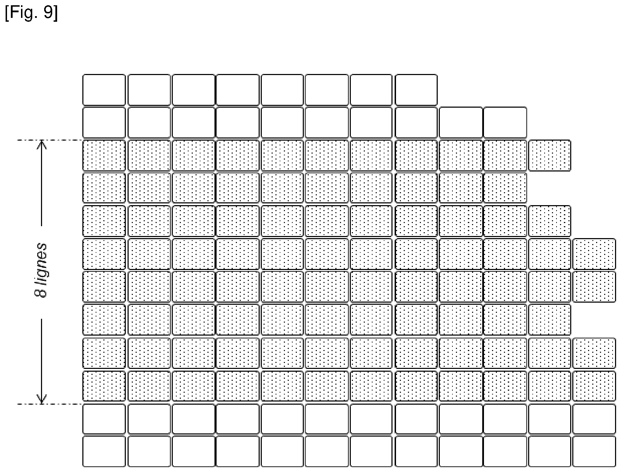

Le filtrage spectral est réalisé par un dépôt de cavités Fabry-Perrot sur la surface sensible du photodétecteur. Chaque bande spectrale couvre 8 lignes de pixels d'un filtre ayant une largeur spectrale inférieure ou égale à 10 nm. Une des bandes spectrales de la matrice est représentée en figure 9. Les pixels correspondant à cette bande spectrale sont représentés en pointillés. Le pas d'échantillonnage spectral est de 10 nm. Pour couvrir le spectre s'étendant de 400 nm à 950 nm correspondant au visible et au proche infrarouge, la matrice comporte donc 55 bandes de filtres différents. 440 lignes de la matrice sont alors nécessaires pour couvrir la totalité du spectre.

On suppose que l'instrument d'observation est embarqué à bord d'un satellite suivant une orbite circulaire à une altitude 620 kilomètres.

A cette altitude et considérant les paramètres de l'instrument d'observation, la vitesse de défilement de la scène est de 6881m/s et la résolution spatiale native d'un pixel est de 1 mètre, perpendiculairement à la direction du défilement du satellite.

Pour obtenir un décalage de la scène d'une ligne exactement sur la matrice de détecteurs entre une première acquisition et la suivante, la période d'échantillonnage du détecteur doit donc être de 145 $\mu$s, ce qui autorise la lecture de 120 lignes au maximum réparties en 30 paquets de 4 lignes, loin des 5456 lignes de la matrice utilisée.

Cet instrument est utilisé dans différents modes d'acquisition. Dans un premier mode d'acquisition, on cherche à obtenir la meilleure résolution spatiale qui vaut 1 mètre au sol. Dans ce cas, chaque bloc de lecture de pixels comporte une colonne de 120 pixels et les blocs sont lus en mode TDI pour conserver la résolution. Le nombre N d'étages de pixels vaut donc 120 et le gain en rapport signal sur bruit vaut ainsi $\sqrt{120}$, soit environ 11. Bien entendu, cette colonne de 120 pixels comporte 15 bandes spectrales et la résolution spectrale est nécessairement dégradée.

Dans un second mode d'acquisition, on privilégie la résolution spectrale. Dans ce cas, on dégrade la résolution spatiale. On sait que la résolution spectrale couvre 8 lignes. On peut donc dégrader la résolution spatiale sur ces huit lignes sans dégrader la résolution spectrale. La résolution spatiale comporte alors 8 pixels en ligne et 8 pixels en colonnes et la période d'échantillonnage peut être multipliée par huit de façon à correspondre à la résolution spatiale. Dans ce cas, cette période vaut 1160 μs, autorisant la lecture de 960 lignes réparties en 24 paquets de 4 lignes au maximum, ce qui permet de lire facilement l'intégralité des 8 lignes de chacune des 55 bandes spectrales. La résolution native restant à 1 mètre, un binning bidimensionnel couvrant un bloc de 8 fois 8 pixels permet de se ramener à une résolution de 8 mètres tout en augmentant le rapport signal sur bruit du produit final d'un facteur 8.

Dans un troisième d'acquisition, la résolution spatiale est de 2 mètres. La fréquence associée ne permet pas de lire l'intégralité des huit lignes de chacune des 55 bandes spectrale et la résolution de 2 mètres ne permet pas d'atteindre le meilleur rapport signal sur bruit. Il est alors nécessaire de faire du traitement TDI sur plusieurs bandes spectrales pour restituer un rapport signal sur bruit acceptable pour ce genre de mission multi-spectrale. On peut utiliser trois bandes spectrales, l'une située dans le rouge, la seconde dans le vert et la troisième située dans le bleu.

Un des avantages principaux de l'instrument d'observation optique selon l'invention est que les différents modes d'acquisition sont commutables à distance, permettant ainsi de changer instantanément la mission, la commutation étant purement électronique.

Ceci permet par exemple de définir, dans un seul satellite d'observation, une mission générique hyperspectrale à large couverture terrestre correspondant à l'enregistrement régulier de toutes les terres émergées dans toutes les bandes spectrales selon une période de plusieurs jours, avec des pixels de grande taille couvrant typiquement plusieurs mètres. Cette mission peut au besoin être interrompue provisoirement et changée en une observation à haute résolution d'un évènement critique donné sans modification de la fauchée du satellite.

Un des avantages de l'invention est qu'il est possible d'utiliser au moins deux modes d'acquisition différents sur une même portion de terrain survolé. On obtient ainsi, à la fois, une bonne résolution spatiale et une bonne résolution spectrale. Il est alors nécessaire que le satellite ou l'aéronef comporte des moyens permettant de balayer deux fois de suite le même terrain avec deux modes d'acquisition différents.

Pour réaliser ce double balayage, le système optique peut comporter, par exemple, un miroir mobile permettant de déplacer l'image du terrain survolé après un premier balayage pour réaliser un second balayage de la même portion de terrain. Lorsqu'il s'agit d'un satellite, si celui-ci est doté d' « agilité », c'est-à-dire de moyens permettant de changer rapidement son orientation de manière connue, il suffit de changer l'orientation du satellite de manière appropriée pour réaliser ce double balayage.

## Revendications

1. Instrument d'observation optique destiné à être embarqué sur un satellite ou un aéronef, ledit instrument d'observation optique comportant un système optique formant d'un terrain survolé une image (I) sur au moins une matrice (M) de photodétection bidimensionnelle composé de pixels ($P_{IJ}$) organisés en lignes ($L_I$) et en groupe de colonnes ($C_J$), ladite matrice alignée sur l'axe de défilement du sol par rapport à l'instrument,

   - chaque ligne de pixels correspondant à différents points de l'image, chaque point d'une ligne correspondant à une même bande spectrale,
   - chaque groupe de colonnes correspondant à une bande spectrale différente,
   - le déplacement du terrain survolé se faisant perpendiculairement aux lignes,
   - l'instrument d'observation comportant un dispositif d'acquisition des données issues des pixels de la matrice de photodétection pendant une période déterminée d'échantillonnage,
   le dispositif d'acquisition fonctionnant selon un mode d'acquisition pendant ladite période, ledit mode d'acquisition étant défini par la lecture commune par un dispositif électronique de blocs matriciels identiques de pixels appartenant à des lignes et des colonnes adjacentes, le nombre de lignes et le nombre de colonnes des blocs étant choisis en fonction d'une résolution spatiale et d'une résolution spectrale attendues dudit instrument,
   **caractérisé en ce que** l'instrument d'observation comporte au moins deux modes d'acquisition, un premier mode d'acquisition dans lequel la lecture des lignes est effectuée par blocs de pixels et un deuxième mode d'acquisition dans lequel la lecture des colonnes est effectuée par blocs de pixels, et l'instrument d'observation est en outre configuré pour commuter d'un mode à l'autre, la commutation étant purement électronique.

2. Instrument d'observation optique selon la revendication 1, **caractérisé en ce que** la durée de la période d'échantillonnage correspond au changement d'une ligne de l'image du terrain survolé.

3. Instrument d'observation optique selon la revendication 1, **caractérisé en ce que** la durée de la période d'échantillonnage correspond au changement de plusieurs lignes de l'image du terrain survolé.

4. Instrument d'observation optique selon l'une des revendications précédentes, **caractérisé en ce que**, dans un mode particulier d'acquisition, chaque bloc comporte une et une seule ligne de pixels.

5. Instrument d'observation optique selon l'une des revendications précédentes, **caractérisé en ce qu'**une sommation des charges des pixels appartenant à un bloc se fait en mode dit « décalage temporel et intégration » ou « TDI », c'est-à-dire que les transferts des charges entre deux lignes adjacentes se font à la vitesse de déplacement de l'image sur les lignes de pixels.

6. Instrument d'observation optique selon l'une des revendications précédentes, **caractérisé en ce qu'**une sommation des charges des pixels appartenant à un bloc se fait en sommation simple dit «binning», c'est-à-dire que les transferts des charges entre deux lignes ou deux colonnes adjacentes se font par simple accumulation.

7. Instrument d'observation optique selon l'une des revendications précédentes, **caractérisé en ce que** le système optique comporte un dispositif de dispersion spectrale agencé de façon que deux lignes successives représentent la même ligne d'image dans deux bandes spectrales différentes et adjacentes.

8. Instrument d'observation optique selon l'une des revendications 1 à 6, **caractérisé en ce que** le système optique comporte des filtres spectraux disposés sur la matrice de photodétection, la longueur d'un filtre étant égale à la longueur d'une ligne de pixels.

9. Instrument d'observation optique selon la revendication 8, **caractérisé en ce que** les filtres spectraux sont des cavités Fabry-Perot dont la largeur spectrale est d'environ 10 nanomètres.

10. Instrument d'observation optique selon l'une des revendications précédentes, **caractérisé en ce que** la matrice de photodétection bidimensionnelle fonctionne soit en mode d'acquisition simultanée ou « global shutter », soit en mode d'acquisition séquentielle ou « rolling shutter ».

11. Instrument d'observation optique selon l'une des revendications précédentes, **caractérisé en ce que** le système optique comporte des moyens optiques d'orientation du champ agencé de façon à balayer successivement deux fois la même portion de terrain, le premier balayage étant réalisé selon un premier mode d'acquisition, le second balayage étant réalisé selon un second mode d'acquisition différent du premier mode d'acquisition.

12. Satellite comportant un instrument d'observation optique selon l'une des revendications 1 à 10, **caractérisé en ce que** le satellite comporte des moyens dits « d'agilité » permettant de changer l'orientation du satellite de façon à balayer successivement deux fois la même portion de terrain, le premier balayage étant réalisé selon un premier mode d'acquisition, le second balayage étant réalisé selon un second mode d'acquisition différent du premier mode d'acquisition.

**Patentansprüche**

1. Optisches Beobachtungsinstrument, das zur Installation an Bord eines Satelliten oder eines Luftfahrzeugs bestimmt ist, wobei das optische Beobachtungsinstrument ein optisches System aufweist, das von einem überflogenen Gelände ein Bild (I) auf mindestens einer zweidimensionalen Photodetektionsmatrix (M) bildet, die aus Pixeln ($P_{IJ}$) zusammengesetzt ist, die in Zeilen ($L_I$) und Gruppen von Spalten ($C_J$) organisiert sind, wobei die Matrix auf die Bewegungsachse des Bodens in Bezug auf das Instrument ausgerichtet ist,

- wobei jede Zeile von Pixeln verschiedenen Punkten des Bildes entspricht, wobei jeder Punkt einer Zeile einem gleichen Spektralband entspricht,
- wobei jede Gruppe von Spalten einem anderen Spektralband entspricht,
- wobei die Bewegung des überflogenen Geländes lotrecht zu den Zeilen erfolgt,
- wobei das Beobachtungsinstrument eine Vorrichtung zur Erfassung von Daten aufweist, die von den Pixeln der Photodetektionsmatrix während einer bestimmten Abtastperiode stammen, wobei die Erfassungsvorrichtung während der Periode in einem Erfassungsmodus arbeitet, wobei der Erfassungsmodus durch das gemeinsame Auslesen identischer Matrixblöcke von zu benachbarten Zeilen und Spalten gehörenden Pixeln durch eine elektronische Vorrichtung definiert ist, wobei die Anzahl von Zeilen und die Anzahl von Spalten der Blöcke in Abhängigkeit von einer erwarteten räumlichen Auflösung und einer erwarteten spektralen Auflösung des Instruments gewählt ist, **dadurch gekennzeichnet, dass** das Beobachtungsinstrument mindestens zwei Erfassungsmodi aufweist, einen ersten Erfassungsmodus, in dem das Auslesen der Zeilen in Pixelblöcken erfolgt, und einen zweiten Erfassungsmodus, in dem das Auslesen der Spalten in Pixelblöcken erfolgt, und

das Beobachtungsinstrument ferner zum Umschalten von einem Modus in den anderen konfiguriert ist, wobei das Umschalten rein elektronisch erfolgt.

2. Optisches Beobachtungsinstrument nach Anspruch 1, **dadurch gekennzeichnet, dass** die Dauer der Abtastperiode dem Wechsel einer Zeile des Bildes des überflogenen Geländes entspricht.

3. Optisches Beobachtungsinstrument nach Anspruch 1, **dadurch gekennzeichnet, dass** die Dauer der Abtastperiode dem Wechsel mehrerer Zeilen des Bildes des überflogenen Geländes entspricht.

4. Optisches Beobachtungsinstrument nach einem der vorhergehenden Ansprüche, **dadurch gekennzeichnet, dass** in einem bestimmten Erfassungsmodus jeder Block nur eine einzige Zeile von Pixeln aufweist.

5. Optisches Beobachtungsinstrument nach einem der vorhergehenden Ansprüche, **dadurch gekennzeichnet, dass** eine Summierung der Ladungen der zu einem Block gehörenden Pixel in einem Modus "Zeitverschiebung und Integration" oder "TDI" erfolgt, d. h., dass die Ladungsübertragungen zwischen zwei benachbarten Zeilen mit der Bewegungsgeschwindigkeit des Bildes auf den Zeilen von Pixeln erfolgen.

6. Optisches Beobachtungsinstrument nach einem der vorhergehenden Ansprüche, **dadurch gekennzeichnet, dass** eine Summierung der Ladungen der zu einem Block gehörenden Pixel als einfache Summierung, "Binning" genannt, erfolgt, d. h., dass die Ladungsübertragungen zwischen zwei benachbarten Zeilen oder Spalten durch einfache Akkumulation erfolgen.

7. Optisches Beobachtungsinstrument nach einem der vorhergehenden Ansprüche, **dadurch gekennzeichnet, dass** das optische System eine Spektralzerlegungsvorrichtung aufweist, die so angeordnet ist, dass zwei aufeinanderfolgende Zeilen die gleiche Bildzeile in zwei verschiedenen und benachbarten Spektralbändern darstellen.

8. Optisches Beobachtungsinstrument nach einem der Ansprüche 1 bis 6, **dadurch gekennzeichnet, dass** das optische System Spektralfilter aufweist, die auf der Photodetektionsmatrix angeordnet sind, wobei die Länge eines Filters gleich der Länge einer Zeile von Pixeln ist.

9. Optisches Beobachtungsinstrument nach Anspruch 8, **dadurch gekennzeichnet, dass** die Spektralfilter Fabry-Perot-Kavitäten mit der spektralen Breite von etwa 10 Nanometern sind.

10. Optisches Beobachtungsinstrument nach einem der vorhergehenden Ansprüche, **dadurch gekennzeichnet, dass** die zweidimensionale Photodetektionsmatrix entweder in einem simultanen Erfassungsmodus oder "Global Shutter" oder in einem sequentiellen Erfassungsmodus oder "Rolling Shutter" arbeitet.

11. Optisches Beobachtungsinstrument nach einem der vorhergehenden Ansprüche, **dadurch gekennzeichnet, dass** das optische System optische Mittel zur Orientierung des Feldes aufweist, die so angeordnet sind, dass derselbe Geländeabschnitt zweimal nacheinander abgetastet wird, wobei die erste Abtastung in einem ersten Erfassungsmodus erfolgt, wobei die zweite Abtastung in einem zweiten Erfassungsmodus erfolgt, der sich vom ersten Erfassungsmodus unterscheidet.

12. Satellit mit einem optischen Beobachtungsinstrument nach einem der Ansprüche 1 bis 10, **dadurch gekennzeichnet, dass** der Satellit sogenannte Agilitätsmittel aufweist, die es zulassen, die Orientierung des Satelliten so zu ändern, dass derselbe Geländeabschnitt zweimal nacheinander abgetastet wird, wobei die erste Abtastung in einem ersten Erfassungsmodus erfolgt, wobei die zweite Abtastung in einem zweiten Erfassungsmodus erfolgt, der sich vom ersten Erfassungsmodus unterscheidet.

**Claims**

1. An optical observation instrument intended to be installed on-board a satellite or an aircraft, said optical observation instrument having an optical system forming an image (I) of an overflown terrain on at least one two-dimensional photodetection matrix (M) composed of pixels ($P_{IJ}$) that are organised into rows ($L_I$) and into groups of columns ($C_J$), said matrix being aligned with the axis of movement of the ground with respect to the instrument,

   - each row of pixels corresponding to different points of the image, each point of a row corresponding to one and the same spectral band,
   - each group of columns corresponding to a different spectral band,
   - the movement of the overflown terrain being perpendicular to the rows,
   - the observation instrument having a device for acquiring data output from the pixels of the photodetection matrix during a defined sampling period,

the acquiring device operating in an acquisition mode during said period, said acquisition mode being defined by the common read-out, by an electronic device, of identical matrix blocks of pixels belonging to adjacent rows and columns, the number of rows and the number of columns of the blocks being chosen as a function of an expected spatial resolution and an expected spectral resolution of said instrument,

**characterised in that** the observation instrument has at least two acquisition modes, a first acquisition mode in which the rows are read out in blocks of pixels and a second acquisition mode in which the columns are read out in blocks of pixels, and

the observation instrument is further configured to switch from one mode to the other, the switch being made purely electronically.

2. The optical observation instrument according to claim 1, **characterised in that** the duration of the sampling period corresponds to the change of a row of the image of the overflown terrain.

3. The optical observation instrument according to claim 1, **characterised in that** the duration of the sampling period corresponds to the change of multiple rows of the image of the overflown terrain.

4. The optical observation instrument according to one of the preceding claims, **characterised in that**, in one particular acquisition mode, each block has one and only one row of pixels.

5. The optical observation instrument according to one of the preceding claims, **characterised in that** the charges of the pixels belonging to a block are summed in a "time-delay-integration" or "TDI" mode, i.e. the transfers of the charges between two adjacent rows occur at the speed of movement of the image over the rows of pixels.

6. The optical observation instrument according to one of the preceding claims, **characterised in that** the charges of the pixels belonging to a block are summed via simple summation, referred to as "binning", i.e. the transfers of the charges between two adjacent rows or columns occur via simple accumulation.

7. The optical observation instrument according to one of the preceding claims, **characterised in that** the optical system contains a spectral dispersion device, which is arranged so that two successive rows represent the same image row in two different and adjacent spectral bands.

8. The optical observation instrument according to one of claims 1 to 6, **characterised in that** the optical system has spectral filters arranged on the photodetection matrix, the length of a filter being equal to the length of a row of pixels.

9. The optical observation instrument according to claim 8, **characterised in that** the spectral filters are Fabry-Perot cavities of which the spectral width is about 10 nanometres.

10. The optical observation instrument according to one of the preceding claims, **characterised in that** the two-dimensional photodetection matrix operates either in a simultaneous acquisition mode, referred to as "global-shutter" mode, or in a sequential acquisition mode, referred to as "rolling-shutter" mode.

11. The optical observation instrument according to one of the preceding claims, **characterised in that** the optical system contains optical field-orienting means arranged so as to successively scan twice the same terrain portion, the first scan being carried out in a first acquisition mode, the second scan being carried out in a second acquisition mode different from the first acquisition mode.

12. A satellite with an optical observation instrument according to one of claims 1 to 10, **characterised in that** the satellite has so-called "agility" means allowing the orientation of the satellite to be changed so as to successively scan twice the same terrain portion, the first scan being carried out in a first acquisition mode, the second scan being carried out in a second acquisition mode different from the first acquisition mode.

[Fig. 1]

Dimension spectrale

C_J

M

P_IJ

L_I

Direction de déplacement

Dimension spatiale

[Fig. 2]

C_J

M

L_I

[Fig. 3]

$C_J$

M

$L_I$

[Fig. 4]

I

$P_{IJ}$

INSTANT t

[Fig. 5]

INSTANT t+T

[Fig. 6]

Mode d'acquisition spectrale

[Fig. 7]

Mode d'acquisition spatiale

[Fig. 8]

[Fig. 9]

8 lignes

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 2018067017 A1

**Littérature non-brevet citée dans la description**

•   **ABDO MOHAMMAD et al.** Dual-mode pushbroom hyperspectral imaging using active system components and feed-forward compensation. *REVIEW OF SCIENTIFIC INSTRUMENTS, AIP, MELVILLE, NY, US,* 23 Août 2018, vol. 89 (8), ISSN 0034-6748